# EUROPEAN PATENT APPLICATION

(11) **EP 4 768 883 A1**
(43) Date of publication of application: **01.07.2026**
(21) Application number: 24223460.7
(22) Date of filing: 27.12.2024
(51) Int. Cl.: G01M 3/24, G01M 3/28, F17D 5/06

(54) **AUTOMATIC IDENTIFICATION OF DISTRICT METERED AREA FLUID RELATIONS**

(71) Applicant: Kamstrup A/S, 8660 Skanderborg (DK)
(72) Inventor: Østergård, Torben, 8660 Skanderborg (DK)
(74) Representative: Plougmann Vingtoft a/s

(57) **Abstract**

A computer implemented method for identifying a fluid relation between a district flow meter and one or more consumption meters in a fluid distribution network. In a first step the method comprises performing a fluid balance calculation between fluid flow measured by the district flow meters and fluid flow measured by the one or more consumption meters. In a second step the method comprises identifying the fluid relation between the district flow meter and the one or more consumption meters in response to the fluid balance calculation and in response to measurements of acoustic noise in the fluid distribution network performed by the one or more consumption meters. Finally, the method comprises forming a group of one or more consumption meters being identified to have a fluid relation with the district flow meter, i.e. belonging to the same District Metered Area (DMA). A reliable automatic DMA generation can thus be provided, since it is based on both a fluid balance calculation and based on acoustic noise fingerprints captured in acoustic noise measurements performed by the consumption meters. In a preferred embodiment, a fluid balance calculation is provided as a first way of initially clustering the consumption meters, and the acoustic noise measurements are then used to verify or change the initial cluster.

## Description

### FIELD OF THE INVENTION

The present invention relates to the field of utility distribution networks, such as water supply distribution networks. More specifically, the invention relates to a method and a system for automatic identification of District Metered Area (DMA) fluid relations in a fluid supply network with distributed consumption meters.

### BACKGROUND OF THE INVENTION

Modern fluid distribution networks, e.g. potable water distribution networks, has distributed consumption meters with Automatic Meter Reading (AMR) arranged at consumer sites. To manage such fluid distribution network, it is important to be able to divide the distribution network into smaller divisions, so-called District Metered Areas (DMAs). This division is advantageous for example to improve leakage monitoring, to avoid or limit pollution, or to provide local fluid pressure reduction.

This division in DMAs is done by identifying fluid relations between the consumption meters and a district meter. However, to track and perform this allocation manually in practice is a complex task, since the fluid distribution network can include complex piping with valves which states (closed or fully or partly open) are unknown. Furthermore, the mapping of the network of pipes may be incomplete, and still further, consumption meters can be added or removed. Thus, the DMAs can dynamically vary, and a dynamic update of the DMAs is therefore required.

Even further, leaks of the fluid in the network, e.g. caused by broken pipes, are generally unknown with respect to magnitude and position in the network. Thus, such unknown leaks further complicate the identification of relations between the consumption meters and a district meter.

Therefore, for management of a fluid distribution network, it is desirable to have a distribution management system which can automatically group the consumption meters to respective district flow meters and to inform the user of the management system accordingly, e.g. by graphically presenting the DMAs on a display. Having a correct and updated view of DMAs is an important tool in the technical operation and maintenance of the network.

### SUMMARY OF THE INVENTION

The technical problem solved is how to automatically identify a fluid relation between consumption meters and a district meter, especially how to make such automatic identification trustworthy. Further, it is desired to make the automatic identification adaptable to changes in the distribution network.

In a first aspect, the invention provides a computer implemented method for identifying a fluid relation between a district flow meter and one or more consumption meters in a fluid distribution network, the method comprising:
- performing a fluid balance calculation between fluid flow measured by the district flow meter and fluid flow measured by the one or more consumption meters,
characterized in that the method comprises
- identifying in response to the fluid balance calculation and in response to measurements of acoustic noise in the fluid distribution network performed by the one or more consumption meters if a fluid relation between the district flow meter and the one or more consumption meters exists, and
- forming a group of one or more consumption meters being identified to have a fluid relation with the district flow meter.

The invention solves the problem of providing a trustworthy automatic identification of fluid relations between consumption meters and district meters, i.e. the basis for defining DMAs. It is based on the insight of the inventors, that a combination of a fluid balance calculation and acoustic noise measurements provides a sufficient identification of fluid relations between consumption meters and district meters which is trustworthy. By using two different types of signatures: fluid balance and acoustic noise, an improved level of confidence of the identified relation is obtained. For example, grouping based only on fluid balance is disturbed by leaks in the network. Thus, fluid balance does not in itself provide a trustworthy relation since leaks will cause imbalance when trying to match fluid volume measured by a district flow meter and consumption meters assumed to be supplied by the fluid measured by the district flow meter.

The invention allows automatic grouping of consumption meters to district flow meters, i.e. defining DMAs, without the need for any manual adjustment by a user. Implemented in software, the DMAs can be continuously updated and presented in a graphical representation on a display to the user. Thereby, the user always has a trustworthy view of the grouping of consumption meters in DMAs or, in other words, the user has a true mapping of which consumption meters are in fluid connection with flow meters designated as district flow meters. District flow meters are typically designated as such by the district metered area management software or by the service personnel, i.e. designated to be the single input of fluid into an area with often thousands of consumption meters. A district flow meter typically differs from a consumption meter by having a larger diameter pipe.

Especially, it has been found that an initial clustering of consumption meters can be based on the fluid balance calculation and then verified or changed in response to an analysis of acoustic noise measured by the consumption meters. Signatures in acoustic noise measured by the consumption meters help to identify a fluid relation to a district flow meter. Noise in the fluid network is caused e.g. by fluid flow noise and noise from pumps, and this noise varies in the distribution network caused by various factors. Thus, a DMA has its own acoustic signature which is shaped by the material of the pipes (plastic or metal), the length of the pipes and the thickness of the pipe walls, the number of valves and the opening degree of the valves, the number of dimension shifts from one pipe to another, the age of the pipes, the number of pumps in the distribution network and their distance to the consumption meters, neighboring heat circulation pumps, the water temperature and the kind of soil in which the pipes are buried, sometimes sand or stone. The acoustic signature is also shaped by at-the-surface traffic, such as car traffic on roads. Thus, it is to be expected that different DMAs will have different acoustical signatures.

Thus, the acoustic noise signatures represent significant information regarding the relation to a district flow meter. Especially, when analysing these noise signatures over a period of one month or more, it is possible to verify a relation or change a grouping based on the noise signatures.

If a consumption meter is found to be in fluid relation with a district flow meter this means that it is assumed that the fluid measured by the consumption meter has passed through said district flow meter.

The invention is based on consumption meters which can measure acoustic noise in the fluid distribution network, e.g. intended for Acoustic Leak Detection (ALD), such as water meters manufactured by Kamstrup A/S. Such meters normally send measured acoustic noise data measured at low flow or no flow on a regular basis to a remote reading system along with measured fluid flow data in order to identify leaks. The acoustic measurement of the present invention is directed to acquiring an acoustic fingerprint of a distribution network and therefore also measurements at normal or higher flow rates are performed. The acoustic noise sensor can be implemented inside or outside the consumption meter, however preferably the acoustic noise sensor is integrated with the consumption meter, e.g. placed inside a housing of the consumption meter.

In an optimum scenario each consumption meter in a flow distribution network performs noise measurements and sends the measured data to a Head End System. The more metering points the better the acoustical fingerprint of the distribution network becomes because the statistical confidence increases. To get an acceptable level of confidence of the acoustical fingerprint the number of consumption meters reporting acoustical noise from a DMA preferably is above 50.

The acoustic noise data available from the consumption meters can be in different forms. For example, the noise data can be in the form of a single value per day, e.g. a minimum measured noise level during a 24-hour period, however more detailed noise data may be available, e.g. data indicative of a frequency spectrum of the measured noise, a peak noise level observed etc., and the temporal resolution may be one hour rather than one day. The most important frequency range for the acoustic noise measurements is 100-10,000 Hz. The acoustic noise measurements are preferably sensed as vibro-acoustic signals of the flow tube at the location of the consumption meter, and this should be understood as covering vibro-acoustic signals of the fluid in the flow tube and vibro-acoustic signals of the flow tube per se. In this way, the acoustic noise measurement data include the acoustic signatures of the fluid network at the location of the consumption meter.

The district flow meter may also be configured for performing acoustic noise measurements, which can add further information to the acoustic relation between the district flow meter and the consumption meters. However, this is not a necessary requirement for the invention to work.

The proposed solution is highly suited to be implemented in software, e.g. forming part of a fluid distribution network management system, e.g. a system for management of a water distribution network, a heating distribution network or a cooling distribution network.

The invention is especially advantageous in that service technicians of a fluid distribution network does not have to manually define which consumption meters belong to which district flow meter. Often, this is today done by means of drawing by hand a polygon around the meters on the computer screen. In one embodiment it suffices that the service technician selects - i.e. designates - a flow meter on the screen to be a district flow meter whereafter the computer implemented method identifies those consumption meters which most likely receive fluid from the designated district flow meter.

In preferred embodiments, the method comprises
- forming an initial cluster of one or more consumption meters to have a fluid relation with the district flow meter in response to the fluid balance calculation, and
- verifying or changing said initial cluster in response to an evaluation of the measurements of acoustic noise in the fluid distribution network performed by the one or more consumption meters.

In this way, the fluid balance matching between district flow meter and consumption meters is used as a first step in clustering the consumption meters. As explained above, this is known to be an unreliable method in itself for a number of reasons. However, in the second step, the acoustic noise measurements by the consumption meters are used as a check to validate if the initial cluster based on the fluid balance calculation seems to be a valid cluster. Thus, the acoustic noise measurements can be used to verify the initial cluster, or if the evaluation of the noise measurements indicates that the initial clustering is not correct, the initial cluster can be changed accordingly to arrive at the final group of consumption meter(s).

For example, if the measurements of the acoustic noise indicate that one consumption meter in the initial cluster is an outlier with respect to acoustic noise signatures, the consumption meter can be removed from the initial cluster. If the outlier consumption meter on the other hand matches acoustic noise signatures measured by consumption meters in a neighboring district meter group, the consumption meter can be moved to this group.

In case the initial cluster is changed in the response to evaluation of the acoustic noise measurements, it may be preferred to perform a further fluid balance calculation based on the changed cluster of consumption meter(s), so as to verify if this provides a suitable fluid balance match to the district flow meter. For example, it may be determined to discard the change, in case the sum of fluid flows measured by the changed cluster of consumption meters exceeds the fluid flow measured by the district flow meter.

In preferred embodiments, the method comprises forming a plurality of groups of consumption meters into District Metered Areas (DMAs), each DMA incorporating a district flow meter, wherein said forming the plurality of groups is performed in response to the identification of the fluid relation between the district flow meters and consumption meters. In this way, a complete virtual sectioning of a fluid supply distribution network into DMAs can be performed, if the basic fluid relation identification method is performed for all district flow meters in the network.

The fluid balance calculation may comprise processing data which represent the fluid flow measured by the district flow meter and tagged with timestamps, and data representing fluid flow measured by the one or more consumption meters and tagged with timestamps, according to an iterative clustering algorithm arranged to balance fluid relation between a measured total fluid flow by the one or more consumption meters during a time period and a measured fluid flow by the district flow meter during the same time period. Basically, this can be implemented as an automatic algorithm which seeks to provide the best balanced match between the measured flow volume by the district flow meter and the measured flow volume by a group of consumption meters. This may especially be made by tagging measurement data of time series of flow measurements with timestamps, e.g. such fluid flow data may be available on an hourly basis.

In a specific way of implementing the fluid balance calculation, a DB-scan based algorithm may be applied to optimize a cost function defining how well the measured total fluid flow by the one or more consumption meters matches the measured fluid flow by the district flow meter. An optimal match is achieved if the fluid volume supplied by the district flow meter is equal to the sum of the fluid volume measured by the consumption meters. Then the supply and demand of fluid is in balance. However, this is only seldom the case because a fluid distribution network has a number of leaks, some caused by deterioration of the pipes and others caused by theft. By 'DB-scan based algorithm' is understood a clustering algorithm belonging to the category known as Density-Based Spatial Clustering of Applications with Noise algorithms. Especially, the DB-scan based algorithm may be used to optimize a cost function involving a penalty if the measured total fluid flow by the one or more consumption meters exceeds the measured fluid flow by the district flow meter.

More specifically, the cost function may involve information about geographical locations of the district flow meter and the consumption meters, thereby the algorithm can be defined to encourage grouping closely spaced consumption meters. In particular the algorithm will start the fluid balance calculation by including those consumption meters that are closest to the district flow meter. The closeness is best defined by an Euclidean distance between the distribution flow meter and the consumption meter but in principle the closeness can also be defined by the length of pipe between the two.

As a start of the iterative algorithm, the cost function is calculated based on an initial clustering of consumption meters, e.g. those closest to the district flow meter. Further, the cost function is iteratively optimized by virtually relocating consumption meters near boundaries of the initial clustering into or out of the cluster to try to reduce the cost, e.g. using random reshuffling, until the cost does not decrease, or decreases below a preset threshold.

In some embodiments, a greedy algorithm may be used to test reallocations consumption meter-by-consumption meter and keep changes that reduce the cost. A simulated annealing method or other global optimization method may be used to avoid local minima in the cost reduction. As an alternative, an algorithm involving Particle Swarm Optimization may be used.

As an alternative, the cost function may be optimized by defining a neural network and trying to fit relations to reduce the cost.

In general, the fluid balance calculation may be implemented by applying a machine learning algorithm to minimize the cost function. The cost function may be used to guide training of such machine learning algorithm.

The method preferably comprises processing time series of measurements of acoustic noise along with timestamps of the measurements to identify acoustic noise characteristics. Especially, the method may comprise processing said time series of the measurements of acoustic noise along with timestamps according to a change-point detection algorithm to identify transients in the measurements of acoustic noise, and further forming a cluster of consumption meters in response to the identified transients. Specifically, the method may comprise applying a DB-scan based algorithm to optimize a cost function.

Said time series may represent measurements of acoustic noise obtained during a time period of at least two weeks, such as at least one month, such as at least two months. Based on various factors, the acoustic noise based evaluation for verifying or changing the initial cluster based on the fluid balance calculation may take a substantial time before enough noise data are available for a reliable acoustic noise based clustering. Especially, this may depend on the available type of acoustic noise measurement data from the consumption meters and at which time interval the acoustic noise measurement data are available. For example, only one minimum measured noise level value may be available once per day from each consumption meter. This is the case in consumption meters that are only powered by a battery and where the meters must economize with energy and therefore cannot send acoustic data frequently. However, in other cases hourly values may be available, and more complex data may be available, such as data indicating the spectrum of the measured acoustic noise. Especially, it may be preferred that each of said acoustic noise measurement data each comprises values indicating two or more acoustic properties, thereby providing more acoustic information to allow easier identification of acoustic signature differences between the consumption meters.

Preferably, said processing of said time series of acoustic noise measurements is performed on said time series of measurements of acoustic noise as a sliding time window with a predetermined length, such as a sliding window with a predetermined length of two weeks to three months.

In general, the processing of said time series of acoustic noise measurements may comprise applying a machine learning algorithm.

Said identifying the fluid relation between the district flow meter and the one or more consumption meters is preferably further performed in response to information indicative of geographic locations of the one or more consumption meters, in case such information is available. Such geographic location information may be applied in the fluid balance calculation step as well as in the acoustic noise evaluation step.

Preferably, the method comprises continuously or iteratively updating identifying said fluid relation between the district flow meter and the one or more consumption meters. In this way, an automatic updated representation of DMAs can be presented to a user, including updates if a consumption meter has been added to the network.

Preferably, the method comprises generating an output indicative of which of a plurality of consumption meters are being grouped as belonging to a district flow meter, said output is based on repeating identifying said fluid relation between the district flow meter and the one or more consumption meters. Especially, the method may comprise generating a graphical illustration of the plurality of consumption meters and their relation to the respective DMAs on a display, e.g. including colours, graphical symbols, a line indicating DMAs or the like.

The fluid distribution supply network may be a water distribution supply network. However, it may also be a heating or cooling distribution supply network.

The method may comprise identifying the fluid relation between the district flow meter and the one or more consumption meters in response to measurements of acoustic noise in the fluid distribution network performed by said district flow meter. Thus, if available, acoustic noise measurements by the district flow meter can improve the fluid relation identification based on the acoustic noise measurements. The acoustic fingerprinting of a fluid distribution network is hereby improved because not only are hundreds or thousands of consumption meters contributing with measured acoustic data but additionally acoustic data from the district flow meter is inputted to the inventive method. Some district flow meters are powered by energy from the electric mains and can advantageously measure and send acoustic data more frequently than the battery powered consumption meters. Further, as the district flow meter is placed in a larger pipe where there is nearly always flow, the acoustic noise measured will mainly be of the type created by the friction of flowing fluid against a pipe wall, i.e. flow noise. At the other end of the fluid distribution network the consumption meters experience less acoustic noise because the flow noise is lower and even goes to zero at night time. The ratio or the relation between acoustic noise measured by the district flow meter and by the consumption meter(s) can be used as a parameter for identifying an acoustical fingerprint of a fluid distribution network, especially of a DMA.

The method may comprise activating a change in acoustic noise in a part of the fluid distribution network to invoke a change in acoustic noise, so as to facilitate identifying a change in acoustic noise measured by one or more consumption meters in fluid relation to said part of the fluid distribution network. E.g. the fluid pressure in a network branch can be changed at a well-known time, since this is known to influence the acoustic noise in the network, and this can be used to improve the noise-based fluid relation identification. In this way, changing acoustic noise on purpose at a well-defined time can be used as a way of facilitating fluid relation identification. This can be achieved by operation of pumps to increase or decrease fluid pressure in the network for example by increasing pump speed or by starting further pumps. Further, valves used for the sectioning of district metered areas or valves used for regulating the amount of flow through a pipe can be changed in their valve position, i.e. closed, opened or changed in their opening degree. Such changes by preferably motorized valves leave a measurable impact on the acoustic noise and can be used for acoustic fingerprinting of a fluid distribution network, in particular of a DMA.

Said acoustic noise in the fluid distribution network may be generated by at least a noise source selected from: fluid flowing through a leak in the piping of the network, a main pump connected to provide fluid pressure in the network, an auxiliary pump connected to provide fluid pressure in the network, fluid flowing through a valve in the network, and fluid flowing through the piping.

Especially, changes in the fluid pressure is known to generate changes in acoustic noise, and this can be caused by operation of pumps.

In an advantageous embodiment of the invention, a first step in the fluid balance calculation comprises identifying possible serially connected district flow meters. If they are not identified and compensated for in the following calculations, they lead to errors in the final result.

Preferably, the described processing steps are performed by a server system, e.g. a cloud-based server system where data analytics are performed. However, some pre-processing of fluid flow data or measured acoustic noise may be performed by each consumption meter before transmitting fluid flow and acoustic noise measurement data. The results of the described processing steps performed on the cloud based server system are shared with a fluid distribution supply network management system of a client such as the control center of a water works. Here the results are displayed on a screen with a graphical user interface.

In general, the method for identifying the fluid relation may output a probability score or a binary indicator or a graphical sign for indicating the level of confidence of the fluid relation identified between the consumption meters and the district flow meter.

In a second aspect, the invention provides a computer program product comprising instructions which, when executed on a computer system with a processor and a memory, causes the computer system to perform the method according to the first aspect.

In a third aspect, the invention provides a fluid distribution supply network management system comprising:
- a computer system programmed with the computer program product according to the second aspect.

Especially, the system may comprise a data interface configured to receive:
- at least fluid flow data indicative of fluid flow measured by a plurality of district flow meters,
- fluid flow data indicative of fluid flow measured by a plurality of consumption meters, and
- acoustic noise data indicative of measured acoustic noise in the fluid distribution network measured by the plurality of consumption meters.

Preferably, the system is a water distribution supply network management system. However, the system may also be a heating or cooling distribution supply network management system.

In general, the various aspects of the invention may be combined and coupled in any way possible within the scope of the invention. The identification of the fluid relation between the district flow meter and the one or more consumption meters may for example be made with or without the district meter measuring acoustic noise. Further, only some district meter areas in a fluid distribution network may use the inventive method while neighbouring district areas may only use a fluid balance calculation. Further, some of the algorithms used for flow data analysis when identifying the initial cluster of consumption meters can also be used when evaluating acoustic noise data, such as the greedy algorithm. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 shows an example of a map illustrating a water works and a water distribution network with district flow meters and consumption meters (residential flow meters),
Figure 2 shows the map from Figure 1 illustrating the result of an automatic DMA mapping after a water balance calculation,
Figure 3 shows the map from Figure 1 illustrating result of an automatic DMA mapping after a water balance calculation followed by a step of using acoustic noise signatures from the consumption meters to change the mapping,
Figure 4 is a time-acoustic noise diagram showing noise transients caused by fluid pressure changes,
Figure 5 is a principle view of a flow meter which is capable of measuring flow rate, flow volume and acoustic noise, and
Figure 6 illustrates steps of a method embodiment.

### DESCRIPTION OF EMBODIMENTS

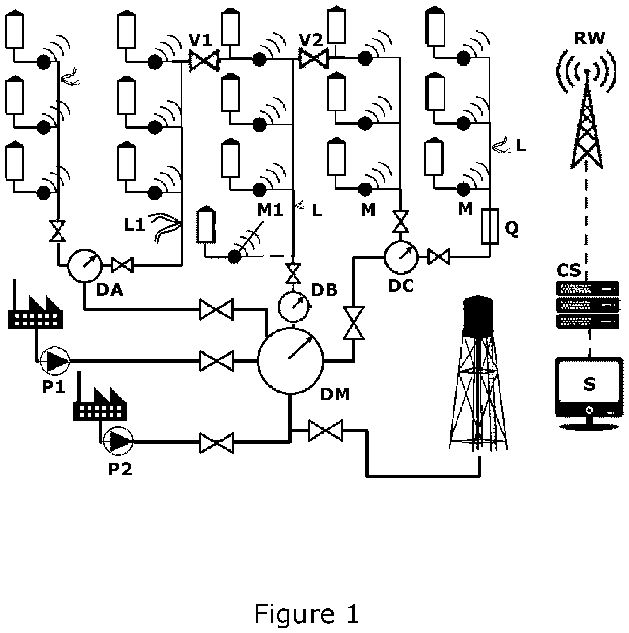

Figure 1 shows an example of a water distribution network with waterworks supplying water via a network to consumers each having a consumption meter CM (indicated by solid dots). District flow meters DA, DB, DC are arranged to measure fluid flow for respective DMAs. Flow meter DM measures the total fluid flow. Operable valves V1, V2 are indicated which can change the water flow in the network. Pumps to apply pressure in the network are indicated as P1 and P2. Further, various fluid leaks L, L1 are indicated. Generally, such leaks L, L1 are located at unknown positions in the network.

Furthermore, in a network, changes in pipe dimension Q cause fluid pressure drop which has been found to generate acoustic noise in the network which can be measured by the consumption meter which are in fluid relation to the pressure drop. In general, the acoustic fingerprint of the fluid distribution network is the sum of noise contributions from several noise sources.

To the right in Figure 1, a remote wireless meter reading system RW is illustrated. This system can collect fluid flow data from consumption meters M and district flow meters DM, DA, DB, DC and further collect acoustic noise measurement data performed by the consumption meters. Further, the illustrated computer system CS can be used to perform the computer implemented method according to the invention as part of a water distribution network management system. A computer screen S conveys a graphical user interface with a map of the fluid distribution network and the district metered areas.

In Figure 1 two district flow meters DA, DB are placed close to each other in the water distribution network. The district meters DA, DB, DC and their downstream pipe networks are not in fluid communication with each other because sectioning valves V1 and V2 are closed, but a pipe and a consumption meter M1 in fluid relation to district flow meter DB stretch into the geographic location of the pipe network relating to district flow meter DA.

A water balance calculation is made by comparing hourly values of the flow measured in the consumption meters with hourly values measured by the district meter. The consumption meters are allocated to a district flow meter, and the sum of water measured by the consumption meters must not surpass the amount of water delivered via the district flow meter. This criterion must be respected for each hour during a period of time, and only if this is true then an initial cluster of consumption meters related to the district flow meter is created. Instead of using hourly values a higher time resolution can be used, such as minutes, which will result in a more precise clustering.

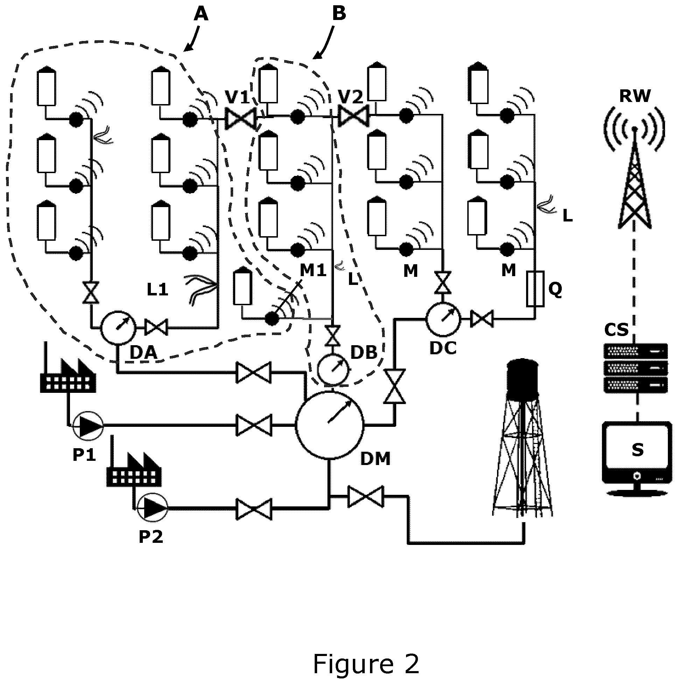

Figure 2 shows the network of Figure 1 after a virtual DMA mapping made by performing a water balance calculation only, and as illustrated by the dashed lines, A and B illustrate DMAs related to district flow meters DA and DB, respectively. Here, it is seen that consumption meter M1 is clustered into DMA A, even though it is evident that M1 belongs to DMA B, when considering the piping layout. This is caused by the water balance calculation being disturbed by the fluid loss in the network caused by the unknown leaks L. Especially the large leak L1 causes a deficit in the water balance calculation of DA and the consumption meters relating to it, and the automatic fluid balance calculation compensates for this deficit by erroneously allocating consumption meter M1 to district flow meter DA. Hence virtual DMA A is not correct.

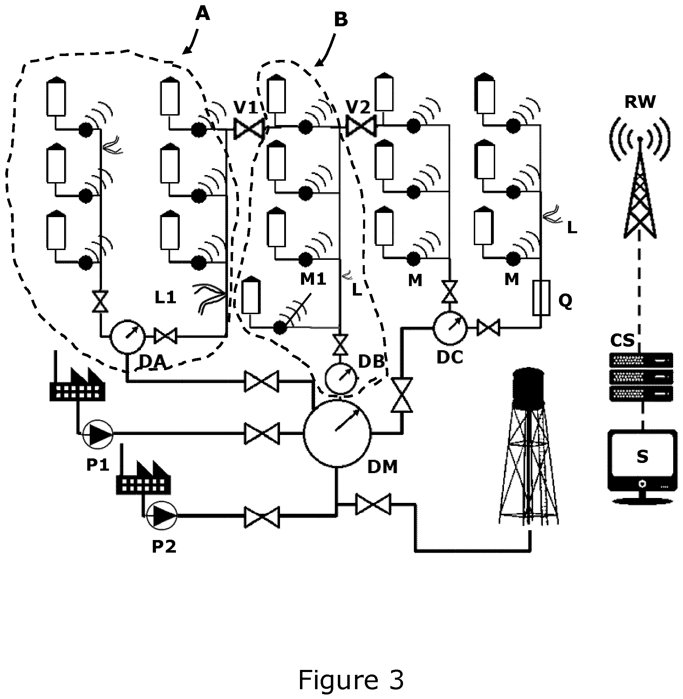

Figure 3 illustrates a DMA mapping after an additional step, namely the evaluation of acoustic noise measurement data collected from the consumption meters, e.g. in the frequency range 100-10,000 Hz. Here, it is seen that acoustic signatures, e.g. caused by acoustic noise generated by the leaks L and especially L1, have resulted in a reallocation of meter M1 which is now included in DMA B instead of DMA A. For example, noise from the leak L1 in DMA A cannot be measured by M1, but only by the consumption meters in DMA A and therefore consumption meter M1 is allocated to DMA B.

According to the invention, the water balance calculation and acoustic noise measurements are taken into account to arrive at a trustworthy automatic DMA grouping of the consumption meters which can be implemented by a Head End System (HES).

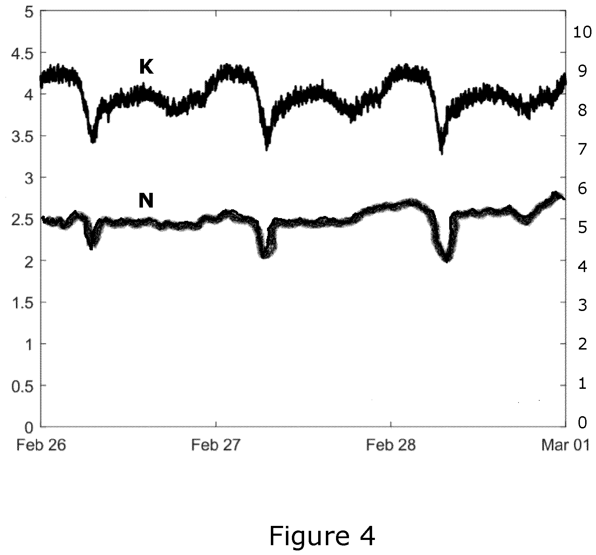

Figure 4 shows an indication of fluid pressure changes in a DMA along with measured acoustic noise in the pipe network. The applicant has found that changes in the pressure of a district network can be detected in the acoustic noise level measured over time by the consumption meters, and this is illustrated in Figure 4.

The curve K on top represents the fluid pressure in a pipe of a DMA during a period of 3 days, and as seen from the left Y-axis the pressure fluctuates within a band of 3,5 to 4.3 bars.

The curve N is a principal sketch of how the noise in the pipe changes over time, and with the noise levels shown on the right Y-axis. It can be seen that when the network pressure drops, then also the noise level drops. Three transients are visible where the pressure drops to 3,5 bar. At the same time the noise level drops and creates transients.

The detection and mapping of these noise transients caused by pressure changes can be used for making an acoustic fingerprint of the DMA. Especially, the acoustic fingerprint can be made in several ways, singly or in combination:
1) By measuring the noise level by each consumption meter during a period of normal or high flow, creating an average and then relating the averaged acoustic noise measurement to the noise level measured by each single consumption meter. If the measurements of the single consumption meter follow the trends of the averaged measurement then the consumption meter must be assumed to be placed in the correct DMA i.e. allocated to the district flow meter that provided the fluid to the consumption meter. A correlation of the two sets of noise data can be made.
2) By measuring the noise level by each consumption meter during a period of no flow or low flow and relating the measurements to the noise level measured by one consumption meter in the way described in 1) above.
3) By only measuring noise levels from consumption meters in one district or by measuring noise levels in two districts and comparing these. For example, a historic log can be established whereby an acoustic DMA fingerprint at an earlier time can be compared to the acoustic DMA fingerprint at a later time. If they differ there may be a need for regrouping the DMA.
4) By measuring noise levels in two districts and performing a mathematical correlation of these. If a consumption meter is found to be weakly correlated with one district and stronger with the other, then relocate the consumption meter from one virtual district to the other.

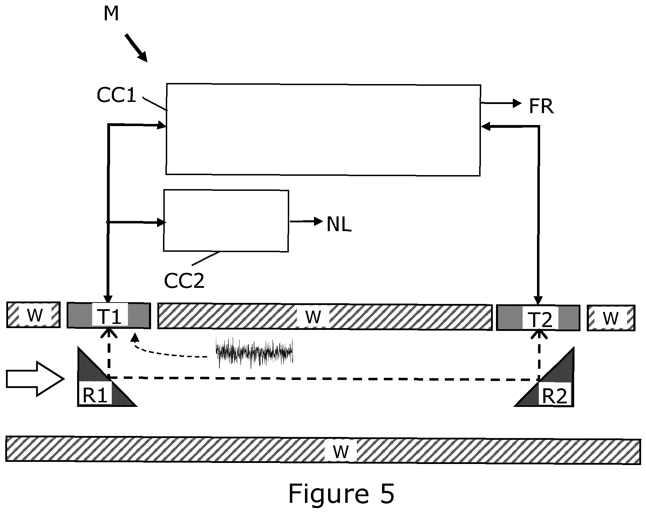

Figure 5 shows a sketch of an ultrasonic water meter M with wireless remote reading capability and capable of performing measurement of acoustic noise in the fluid distribution network. Thus, such consumption meter is highly suited for use in a fluid supply distribution network, since it can generate the acoustic noise measurement data which are used by the invention.

Two flow transducers T1, T2, in the form of a pair of piezoelectric ultrasonic transducers, are arranged in the wall W of a flow tube in which fluid flows in the direction indicated by the large arrow to the left. The two transducers T1, T2 are operated by a flow measurement sub-circuit CC1 to transmit and receive ultrasonic signals via the transducers T1, T2, to be able to generate a flow rate signal indicative of the fluid flow rate, FR based on known ultrasonic transit time measurement techniques. In the shown embodiment, reflectors R1, R2 serve to direct the ultrasonic signals (dashed arrows) along the fluid flow in the flow tube.

Additionally, in an alternative embodiment the transducers may be arranged along an unbroken flow tube wall or inside a sealable housing adapted to interface with fluid in the flow tube. For measuring the flow rate transducers T1 and T2 are used, but they are also used for detecting noise signals in the flow tube and in the distribution network pipe, especially in the service pipe connecting the flow tube to a main network distribution pipe

The consumption meter M preferably comprises a communication module (not shown) arranged to communicate data indicative of the noise level NL in addition to consumption data based on the measured flow rate FR. In some embodiments, the consumption meter may correlate the measured flow rate FR and the noise level NL (and possibly other measured values) in order to be able to detect any anomaly, which may then be communicated accordingly.

The first piezoelectric transducer T1 involved in the ultrasonic flow rate measurement is used as sensor for the acoustic signals in the flow tube or in the fluid therein. Thus, both the flow measurement sub-circuit CC1 and the noise measurement sub-circuit CC2 are connected to the first transducer T1. The first and second sub-circuits CC1, CC2 may be operated simultaneously, or it may be desirable that they are controlled so that flow rate FR and noise level NL are measured at non-overlapping operating time periods. However, due to the spectral difference between on one hand the acoustic signals to be picked up for detecting leakage noise, flow noise or other district metered area defining acoustic noises and on the other hand the ultrasonic signal involved in flow rate measurements (up to 2 kHz versus a few MHz), the second control circuit CC2 may be arranged to spectrally filter the output from the first transducer T1.

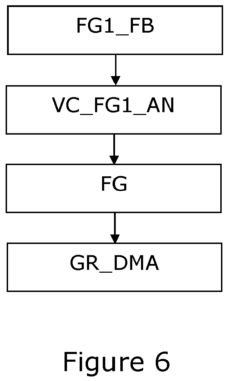

Figure 6 illustrates steps of a method embodiment, i.e. a computer implemented method for identifying a fluid relation between a district flow meter and one or more consumption meters in a fluid distribution network. The method comprises forming FG1_FB an initial cluster of one or more consumption meters to have a fluid relation with the district flow meter in response to a fluid balance calculation between fluid flow measured by the district flow meter and fluid flow measured by the one or more consumption meters. Next, verifying or changing VC_FG1_AN said initial group in response to an evaluation of measurements of acoustic noise in the fluid distribution network performed by the one or more consumption meters. Then, forming FG a group of one or more consumption meters being identified to have a fluid relation with the district flow meter. Further, generating an output indicative of which of a plurality of consumption meters are being grouped as belonging to a DMA by generating GR_DMA a graphical illustration of the plurality of consumption meters and their relation to the respective DMAs on a display.

To sum up, the invention provides a computer implemented method for identifying a fluid relation between a district flow meter and one or more consumption meters in a fluid distribution network. The method comprises performing a fluid balance calculation between fluid flow measured by the district flow meter and fluid flow measured by the one or more consumption meters. Further, identifying the fluid relation between the district flow meter and the one or more consumption meters in response to the fluid balance calculation and in response to measurements of acoustic noise in the fluid distribution network performed by the one or more consumption meters. Finally, forming a group of one or more consumption meters being identified to have a fluid relation with the district flow meter, i.e. belonging to the same District Metered Area (DMA). A trustworthy automatic DMA generation can be provided, since it is based on both a fluid balance calculation and based on acoustic noise fingerprints captured in acoustic noise measurements performed by the consumption meters. In a preferred embodiment, a fluid balance calculation is provided as a first way of initially clustering the consumption meters, and the acoustic noise measurements are then used to verify or change the initial cluster.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. A computer implemented method for identifying a fluid relation between a district flow meter (DA, DC, DM) and one or more consumption meters (CM) in a fluid distribution network, the method comprising:
- performing a fluid balance calculation between fluid flow measured by the district flow meter and fluid flow measured by the one or more consumption meters,
**characterized in that** the method comprises
- identifying in response to the fluid balance calculation and in response to measurements of acoustic noise in the fluid distribution network performed by the one or more consumption meters if a fluid relation between the district flow meter and the one or more consumption meters exists, and
- forming (FG) a group of one or more consumption meters being identified to have a fluid relation with the district flow meter.

2. The method according to claim 1, comprising
- forming (FG1_FB) an initial cluster of one or more consumption meters to have a fluid relation with the district flow meter in response to the fluid balance calculation, and
- verifying or changing (VC_FG1_AN) said initial cluster in response to an evaluation of the measurements of acoustic noise in the fluid distribution network performed by the one or more consumption meters.

3. The method according to any of the preceding claims, comprising forming a plurality of groups (A, B) of consumption meters into District Metered Areas (DMAs), each DMA incorporating a district flow meter, wherein said forming the plurality of groups is performed in response to the identification of the fluid relation between the district flow meters and consumption meters.

4. The method according to any of the preceding claims, wherein said fluid balance calculation comprises processing fluid flow measured by the district flow meter along with timestamps and fluid flow measured by the one or more consumption meters along with timestamps according to an iterative clustering algorithm arranged to balance fluid relation between a measured total fluid flow by the one or more consumption meters during a time period and a measured fluid flow by the district flow meter during the same time period.

5. The method according to claim 4, wherein said fluid balance calculation involves applying a DB-scan based algorithm to optimize a cost function defining how well the measured total fluid flow by the one or more consumption meters matches the measured fluid flow by the district flow meter, such as the cost function involving a penalty if the measured total fluid flow by the one or more consumption meters exceeds the measured fluid flow by the district flow meter.

6. The method according to any of the preceding claims, comprising processing time series of measurements of acoustic noise along with timestamps to identify acoustic noise characteristics.

7. The method according to claim 6, comprising processing said time series of the measurements of acoustic noise along with timestamps according to a change-point detection algorithm to identify transients in the measurements of acoustic noise, and forming a group of consumption meters in response to the identified transients.

8. The method according to claim 6 or 7, comprising applying a DB-scan based algorithm to optimize a cost function defining how well the acoustic noise of one or more consumption meters matches the acoustic noise of the initial cluster of one or more consumption meters

9. The method according to any of claims 6-8, wherein said processing is performed on said time series of measurements of acoustic noise as a sliding time window with a predetermined length, such as a sliding window with a predetermined length of two weeks to three months.

10. The method according to any of the preceding claims, wherein said identifying the fluid relation between the district flow meter and the one or more consumption meters is further performed in response to information indicative of geographic locations of the one or more consumption meters.

11. The method according to any of the preceding claims, comprising generating an output indicative of which of a plurality of consumption meters are being grouped as belonging to a district flow meter, said output is based on repeating identifying said fluid relation between the district flow meter and the one or more consumption meters, and by generating (GR_DMA) on a display (S) a graphical illustration of the plurality of consumption meters and their relation to one or more district flow meters.

12. The method according to any of the preceding claims, wherein the fluid distribution supply network is a water distribution supply network.

13. The method according to any of the preceding claims, further comprising identifying the fluid relation between the district flow meter and the one or more consumption meters in response to measurements of acoustic noise in the fluid distribution network performed by said district flow meter.

14. The method according to any of the preceding claims, further comprising activating a change in acoustic noise in a part of the fluid distribution network to invoke a change in acoustic noise measured by the one or more consumption meters in fluid relation to said part of the fluid distribution network.

15. The method according to any of the preceding claims, wherein said acoustic noise in the fluid distribution network is generated by at least a noise source selected from: fluid flowing through a leak in the piping of the network, a main pump connected to provide fluid pressure in the network, an auxiliary pump connected to provide fluid pressure in the network, fluid flowing through a valve in the network, and fluid flowing through the piping.

16. A computer program product comprising instructions which, when executed on a computer system with a processor and a memory, causes the computer system to perform the method according to any of claims 1-15.

17. A fluid distribution supply network management system comprising:
- a computer system (CS) programmed with the computer program product according to claim 16.

18. The system according to claim 17, comprising a data interface configured to receive:
- at least fluid flow data indicative of fluid flow measured by a plurality of district flow meters (DA, DB, DC),
- fluid flow data indicative of fluid flow measured by a plurality of consumption meters (CM), and
- acoustic noise data indicative of measured acoustic noise in the fluid distribution network measured by the plurality of consumption meters.
